# EUROPEAN PATENT SPECIFICATION

(11) **EP 2 975 976 B1**
(45) Date of publication and mention of the grant of the patent: **13.03.2019**
(21) Application number: 14769925.0
(22) Date of filing: 24.01.2014
(51) Int. Cl.: A47J 27/00, A47J 36/00

(54) **ELECTRIC RICE COOKER**
ELEKTRISCHER REISKOCHER
CUISEUR À RIZ ÉLECTRIQUE

(30) Priority: 21.03.2013 CN 201320132906 U
(43) Date of publication of application: 27.01.2016
(73) Proprietor: Zhejiang Supor Electrical Appliances Manufacturing Co., Ltd., Zhejiang 310052 (CN)
(72) Inventor: HUANG, Qun, Hangzhou Zhejiang 310052 (CN)
(74) Representative: Weber, Jean-François
(86) International application number: PCT/CN2014/071368
(87) International publication number: WO 2014/146515

(56) References cited:
- CN-A- 1 050 980
- CN-U- 201 452 823
- CN-U- 201 452 823
- CN-U- 201 996 292
- CN-U- 203 138 052
- CN-U- 203 138 053
- JP-A- H09 140 569
- JP-A- H09 140 569
- JP-A- 2003 144 310
- US-A- 5 613 774

## Description

The invention relates to the field of electric or electromagnetic heating cookers, in particular to an electric rice cooker.

An electric rice cooker usually has an inner pot and an inner cover. The inner pot is used for containing a cooking material, such as rice and water, and the inner pot cooperates with a heating element, such as a heating plate or a coil panel, thereby heating the cooking material contained therein. The inner cover is used for covering an opening located at the upper part of the inner pot, so as to close the inner pot during cooking and prevent steam in the inner pot from escaping.

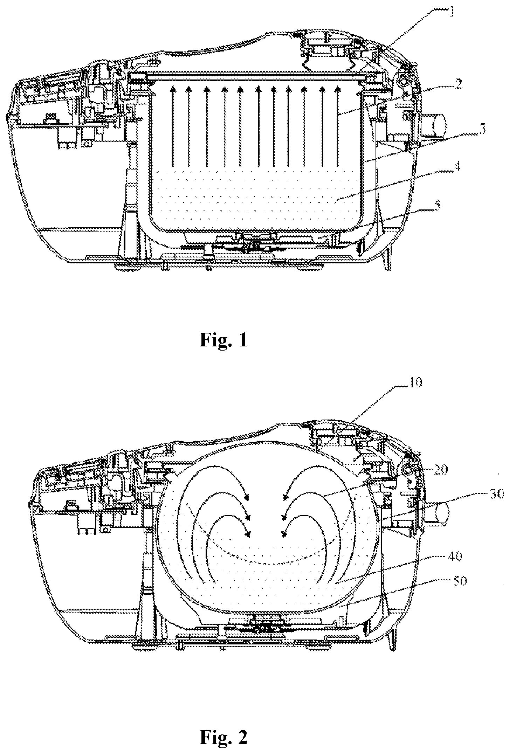

Currently, the inner covers of the electric rice cookers available in the market are all planar-type. It is already known that a rice cooker has a similar structure as that of the rice cooker described in CN1498572A. As shown in Fig. 1, such an electric rice cooker comprises an inner cover 1 and an inner pot 3. The inner cover 1 is planar-type, and covers the opening at the upper part of the inner pot 3. The inner pot 3 contains an appropriate amount of cooking material 4, such as rice and water. The bottom face of the inner pot 3 is in contact with a heating plate 5, so as to obtain heat for heating the cooking material 4. During cooking, the heat provided by the heating plate 5 is conducted to the inner pot 3 and the cooking material 4 therein, and hot airflows 2 rise in the inner pot 3 and are obstructed by the inner cover 1. In the structure of the electric rice cooker shown in Fig. 1, as the inner cover 1 is planar-type, and the side wall inner surface of the inner pot 3 is rectilinear, the rising hot air flows 2 in the inner pot 3 are obstructed and cannot form effective circulating flow in the inner pot 3, resulting in non-uniform heating inside the inner pot 3, and affecting the cooking effect. Therefore, it is necessary to make improvement while overcoming the above shortcomings in the prior art. Document CN 201 452 823 U discloses a cooker including an inner pot with a side wall which is essentially straight.

The main object of the invention is to provide an electric rice cooker, which promotes the circulating flow of hot airflows in an inner pot, so that the temperature in the inner pot is more uniform.

To achieve the above object, an electric rice cooker in accordance with claim 1 is provided.

According to another aspect, the projecting portion of the at least part of the inner surface of the inner cover is formed at the top center of the inner cover.

According to another aspect, the entire inner surface of the inner cover projects toward the direction away from the inner pot.

According to another aspect, the inner surface of the inner cover is a first revolution surface, which has a first revolution generatrix and a first revolution axis.

According to another aspect, the first revolution generatrix is an arc, which has a first circle center located on the first revolution axis.

According to another aspect, the inner surface of the inner pot is a second revolution surface, which has a second revolution generatrix and a second revolution axis, and the first revolution axis and the second revolution axis coincide.

According to another aspect, the second revolution generatrix includes a side wall curved segment for forming the side wall inner surface of the inner pot, and the maximal curvature radius of the side wall curved segment is less than the maximal latitude circle radius of the side wall inner surface.

According to another aspect, the side wall curved segment is a side wall arc segment, which has a side wall arc radius and a second circle center, and the perpendicular distance between the second circle center and the second revolution axis is greater than zero, and the second circle center and the side wall arc segment are located at the same side of the second revolution axis.

According to another aspect, the second revolution generatrix includes a side wall arc segment for forming the side wall inner surface of the inner pot, and the side wall arc segment has a third circle center, and the perpendicular distance between the third circle center and the second revolution axis is equal to zero.

According to another aspect, the first circle center and the third circle center coincide.

According to the technical solution of the invention, at least part of the inner surface of the inner pot is in a shape favorable for circulating flow of the hot airflows, and at least part of the inner surface of the inner cover is in a shape favorable for circulating flow of the hot airflows, thus being favorable for forming vortex airflows in the space defined by the inner pot and the inner cover together, and producing more effective circulating thermal convection, so that the heating in the inner pot is more uniform.

The drawings of the description are intended for further understanding of the invention. The schematic embodiments of the invention and description thereof are intended for explaining the invention, instead of improperly defining the invention. In the drawings:
Fig. 1 is a structural schematic view of an electric ricer cooker in the prior art;
Fig. 2 is a structure diagram of an electric ricer cooker of the invention;
Fig. 3 is a structure diagram of an inner pot of the electric ricer cooker of the invention; and
Fig. 4 is a schematic view illustrating the thermal convection way of the inner pot of Fig. 3.

It is to be noted that the features of the embodiments of the invention can be combined with each other without clear definition or conflict. The invention will be described below in details with reference to the drawings and in conjunction with the embodiments.

To overcome the shortcomings of the electric rice cooker in the prior art, the invention provides an electric rice cooker with an improved structure, which can improve the thermal convection way in an inner pot, so that heating in the inner pot is more uniform, thus being beneficial to improving the cooking effect.

Fig. 2 is a structure diagram of an electric ricer cooker of the invention . As shown in Fig. 2, the electric ricer cooker provided by the invention comprises an inner cove 10 and an inner pot 30. The inner cover 10 covers an opening of the upper part of the inner pot 30, so as to close the inner pot 30. The inner pot 30 contains an appropriate amount of cooking material 40 therein, such as rice and water. The bottom face of the inner pot 30 is in contact with a heating plate 50, so as to obtain heat for heating the cooking material 40.

In this case, the inner surface of the inner cover 10 is a first revolution surface, which has a first revolution generatrix and a first revolution axis. The first revolution generatrix is an arc, which has a first circle center located on the first revolution axis. That is to say, the inner surface of the inner pot 10 is a part cut off from a spherical surface.

Moreover, the inner surface of the inner pot 30 is a second revolution surface, which has a second revolution generatrix and a second revolution axis. The first revolution axis and the second revolution axis coincide. The second revolution generatrix includes a side wall arc segment for forming the side wall inner surface of the inner pot, and the circle center of the side wall arc segment is located on the second revolution axis, thereby forming the inner pot at least the side wall of which is a spherical inner surface.

Referring to Fig. 2, heat of the heating plate 50 is conducted to the inner pot 30, so that the cooking material 40 in the inner pot 30 is heated to boiling and tumbling, and hot airflows 20 rise along the side wall, formed as the spherical inner surface, of the inner pot 30, and then flows along the spherical inner surface of the inner cover 10. Thus, vortex airflows shown in Fig. 2 are formed in the space defined by the inner pot 30 and the inner cover 10 together, and effective circulating thermal convection is produced, so that the heating in the inner pot 30 is more uniform.

In the second revolution surface forming the inner surface of the inner pot, the circle center of the side wall arc segment for forming the side wall inner surface can also be located at a certain distance from the second revolution axis, thereby forming the special-shape spherical inner pot, at least the side wall of which bulges outward or, in an embodiment not covered by the present invention, contracts inward. Thus, the hot airflows can still rise along the side wall arc segment of the inner pot, and then flows along the spherical inner surface of the inner cover, thereby producing effective circulating thermal convection.

The inner surface of the inner pot can also adopt other shapes, for example, at least part of the inner surface of the inner pot has an outward projecting shape, thereby forming the shape favorable for circulating flow of the hot airflows on at least part of the inner surface of the inner pot.

Of course, the inner cover can also adopt other shapes. For example, at least part of the inner surface of the inner cover can project toward the direction away from the inner pot, thereby forming a shape favorable for circulating flow of the hot airflows on at least part of the inner surface of the inner pot. The projecting part is preferably located at the top center of the inner cover. The entire inner surface of the inner cover can also project toward the direction away from the inner pot. When the inner surface of the inner cover is formed as the first revolution surface, the first revolution generatrix can also be a curved line.

The shape of the inner surface of the inner pot will be described below in details, and the shape is favorable for producing the effective thermal convection in the inner pot, thereby further improving the circulating thermal convection in the space defined by the inner pot and the inner cover together, so that heating in the inner pot is more uniform.

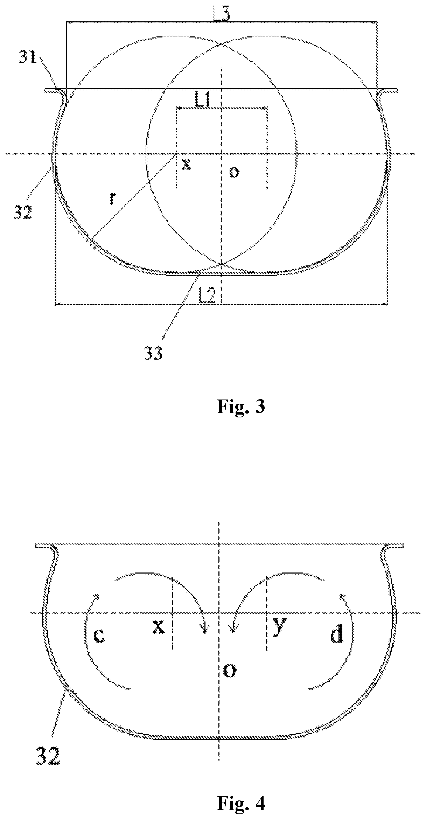

Fig. 3 is a structure diagram of the inner pot of the electric ricer cooker of the invention. As shown in Fig. 3, the inner pot is in the shape of a revolution body, and the inner surface thereof is the second revolution surface, which is formed by rotating the second revolution generatrix by 360° about the second revolution axis o. Fig. 3 actually shows any vertical section of the revolution body including the second revolution axis o, and in the vertical section, either of the inner side lines of the symmetrical parts at the left and right sides of the second revolution axis o can be the second revolution generatrix, and the part located at the left side of the second revolution axis o is described below as the second revolution generatrix.

Referring to Fig. 3, at the left side of the second revolution axis o, the second revolution generatrix of the second revolution surface is composed of a flanging segment 31, a side wall arc segment 32 and a first straight line 33, wherein the side wall arc segment 32 is a main body part of the second revolution generatrix and is used for forming the side wall inner surface of the inner pot. The side wall arc segment 32 has a side wall arc radius r and a second circle center x, and the second circle center x is not located on the second revolution axis o, but at a certain perpendicular distance from the second revolution axis o at the side close to the side wall arc segment 32, that is, the second circle center x and the side wall arc segment 32 are located at the same side of the second revolution axis o. As shown in Fig. 3, the perpendicular distance is L1/2.

From another perspective, the side wall arc segment 32, through revolution about the second revolution axis o, forms the second revolution surface, i.e. the side wall inner surface of the inner pot. The second revolution surface has a maximal revolution radius L2/2, which is greater than the side wall arc radius r of the side wall arc segment 32. Referring to Fig. 3, the maximal revolution radius L2/2 is equal to the sum of perpendicular distance L1/2 and the side wall arc radius r, that is, L2=L1+2r.

Moreover, the first straight segment 33 is connected to the lower end of the side wall arc segment 32 and is perpendicular to the second revolution axis o, and the first straight segment 33 is tangent to the side wall arc segment 32, such that the side wall arc segment 32 and the first straight segment 33 smoothly join together. The first straight segment 33 constitutes the bottom inner surface of the inner pot.

In addition, the flanging segment 31 is connected to the upper end of the side wall arc segment 32, and includes a transitional arched segment and a second straight segment. The circle center of the transitional arched segment is located at the outer side of the wall surface of the inner pot, and the transitional arched segment is smoothly connected with the side wall arc segment 32 along the tangential direction of the side wall arc segment 32. The second straight segment is perpendicular to the second revolution axis o, but extends towards the outer side of the wall surface of the inner pot, and the second straight segment is tangent to the transitional arched segment, to ensure smooth transition therebetween. The transitional arched segment constitutes an inner surface of the transitional part between the side wall of the inner pot and the pot rim of the inner pot. The second straight segment constitutes an upper surface of the pot rim of the inner pot.

Thus, the second revolution generatrix constituted by the flanging segment 31, the side wall arc segment 32 and the first straight segment 33 can be used for forming the whole inner surface of the inner pot and the upper surface of the pot rim of the inner pot. The outer surface of the inner pot and the lower surface of the pot rim of the inner pot can also be formed by a similar revolution generatrix, so that the wall of whole inner pot has a uniform thickness. Of course, a different form of revolution generatrix can also be adopted to form the outer surface and the lower surface.

Through careful analysis and many experiments, the inventor finds that the magnitude of the perpendicular distance between the second circle center x of the side wall arc segment 32 and the second revolution axis o can affect the thermal convection way in the inner pot, thereby affecting the temperature distribution in the inner pot. Specifically, as shown in Fig. 3, when the perpendicular distance is greater than zero, and the second circle center x and the side wall arc segment 32 are located at the same side of the second revolution axis o, the thermal convection way in the inner pot can be improved. When the ratio (L1/2)/ (L1/2+r) of the perpendicular distance (L1/2) to the sum (L1/2+r) of the perpendicular distance and the radius of the side wall arc segment 32 is greater than or equal to 0.15 and less than or equal to 0.35, most effective thermal convection can be produced in the inner pot provided by the utility model. That is to say, when the shape of the inner surface of the inner pot satisfies the formula 0. 15 ≤ (L1/2) / (L1/2+r) ≤ 0. 35, most effective thermal convection can be achieved in the inner pot.

Fig. 4 is a schematic view illustrating the thermal convection way of the inner pot of Fig. 3. When the shape of the inner surface of the inner pot satisfies the above formula, the center of the inner pot is no longer a single sphere center, but an annular region with edges x and y and a radius L1/2. In heating, hot water at the wall of the inner pot flows towards the annular region respectively along directions c and d, and at the same time water in the annular region flows toward the wall, and as the annular region has a greater volume than the single sphere center, sufficient water can be added to the wall, thus producing effective thermal convection. Moreover, when the annular region is too large, on the contrary, the water at the wall would be obstructed from flowing into the annular region, thus affecting thermal convection.

According to the technical solution of the invention, as the second circle center of the side wall arc segment is not located on the second revolution axis, but at a certain perpendicular distance from the second revolution axis at the side close to the side wall arc segment, the central region of the inner pot is enlarged, and in heating, when water at the side wall of the inner pot flows to the central region of the inner pot from every direction, the central region has sufficient water to be added to the surrounding side wall, thus improving the thermal convection way in the inner pot, so that the temperature distribution in the inner pot is more uniform.

In a practical cooking test in the inner pot provided by the invention, rice grains are driven by hot water flows to produce thermal convection with the annular region, and the water surface in the annular region at the center of the inner pot has a sunken shape, and strong thermal convection makes the temperature in the inner pot more uniform, so that rice in upper layers and lower layers within the inner pot are substantially consistent in expansion rate and water absorption rate.

In addition, when the shape of the inner surface of the inner pot according to the invention satisfies the above formula, compared with the spherical inner pot of the prior art, the inner pot according to the invention has a superficial area increased by 5-15%, at the same height. This is particularly advantageous for the electric rice cooker applying the electromagnetic heating principle, since the increase of the superficial area of the inner pot is equivalent to increase of the heating area, and a magnetically conductive layer on the outer surface of the inner pot can generate more eddy currents in a high frequency magnetic field, thus increasing the effective utilization rate of electric energy.

In addition, in Fig. 3, the inner pot is provided with an opening part, which has a diameter L3 and a radius L3/2. As described above, the side wall inner surface of the inner pot has the maximal revolution radius L2/2, and L2 is actually equal to L1+2r, that is, L2 is twice the sum of the perpendicular distance between the second circle center x of the side wall arc segment 32 and the second revolution axis o, and the radius of the side wall arc segment 32.

Through adjusting the ratio of L3 to L2, inner pots with different necking rates can be obtained, that is to say, the ratio of the radius of the opening part of the inner pot to the maximal revolution radius of the side wall inner surface of the inner pot embodies the necking degree of the inner pot. The less the ratio is, the greater the necking degree of the inner pot is, and the more efficiently the steam at the pot wall part is restricted from flowing out. Of course, the necking rate should not be too small; otherwise it can cause difficulty in processing of the inner pot body, installation of the inner pot in the electric rice cooker and the like.

Supposing that, in the spherical inner pot of the prior art, the opening part has a diameter L3 and a radius L3/2. In the inner pot provided by the utility model, the opening part also has a diameter L3 and a radius L3/2, but the maximal revolution radius of the side wall inner surface of the inner pot is increased compared with that of the prior art, and thus the necking rate of the inner pot is reduced. Through many experiments, the inventor finds that when the ratio of L3 to L2 (i.e. L3/2 : L1/2+r) is greater than or equal to 0.85 and less than or equal to 0.95, the inner pot has an appropriate necking rate, and in this case not only can the steam at the pot wall part be effectively restricted from flowing out, but also processing and installation are convenient, and thus a proper balance point is found between improving the heating function and facilitating manufacture and installation. Preferably, when the ratio is greater than or equal to 0.9 and less than or equal to 0.94, the inner pot has the most appropriate necking rate.

Furthermore, the side wall arc segment may not be limited to an arc segment with a fixed radius, but can be a side wall curved segment with different curvature radii, as long as the maximal curvature radius of the side wall curved segment is less than the maximal latitude circle radius (the maximal latitude circle radius refers to the radius of the latitude circle with the largest sectional area among the sectional areas of a revolution surface formed by the side wall inner surface of the inner pot) of the side wall inner surface of the inner pot.

Thus, in the inner pot in the shape of the revolution body, the maximal curvature radius of the side wall curved segment for forming the side wall inner surface of the inner pot is less than the maximal latitude circle radius of the side wall inner surface, so that the curvature center of the maximal curvature radius of the side wall curved segment is not located on the second revolution axis of the second revolution surface, but at a certain distance from the second revolution axis, thus enlarging the area of the central region of the inner pot. And in heating, when water at the side wall of the inner pot flows to the central region of the inner pot from every direction, the central region has sufficient water to be added to the surrounding side wall, thus improving the thermal convection way in the inner pot, so that the temperature distribution in the inner pot is more uniform.

The inner pot and/or the inner cover provided by the invention are applicable to electric heating or electromagnetic heating cookers, such as electric rice cookers, electric pans and electric pressure pans, and are also applicable to cookers with a pot for containing articles to be heated and directly or indirectly heating the articles.

Described above are only preferred embodiments of the invention and are not intended for limiting the invention, and various alterations and changes of the invention can be made by those skilled in the art. Any modification, equivalent substitution, improvement and the like are intended to be included in the protection scope of the invention as defined by the appended claims.

## Claims

1. An electric rice cooker, comprising an inner pot (30) and an inner cover (10) for covering an opening of the inner pot (30), said rice cooker further comprising a heating plate (50), said inner pot (30) being suitable for containing rice and water, and having a side wall and a bottom face which is in contact with said heating plate (50); at least part of the inner surface of the inner cover (10) projects toward the direction away from the inner pot (30); at least part of the inner surface of the inner pot (30) having an outward projecting shape, said rice cooker being **characterized in that** said side wall bulges outward.

2. The electric rice cooker according to claim 1, **characterized in that** the projecting portion of the at least part of the inner surface of the inner cover (10) is formed at the top center of the inner cover (10).

3. The electric rice cooker according to claim 1, **characterized in that** the entire inner surface of the inner cover (10) projects toward the direction away from the inner pot (30).

4. The electric rice cooker according to claim 3, **characterized in that** the inner surface of the inner cover (10) is a first revolution surface, which has a first revolution generatrix and a first revolution axis.

5. The electric rice cooker according to claim 4, **characterized in that** the first revolution generatrix is an arc, which has a first circle center located on the first revolution axis.

6. The electric rice cooker according to claim 5, **characterized in that** the inner surface of the inner pot (30) is a second revolution surface, which has a second revolution generatrix and a second revolution axis, and the first revolution axis and the second revolution axis coincide.

7. The electric rice cooker according to claim 6, **characterized in that** the second revolution generatrix includes a side wall curved segment (32) for forming the side wall inner surface of the inner pot (30).

8. The electric rice cooker according to claim 7 **characterized in that** the maximal curvature radius of the side wall curved segment is less than the maximal latitude circle radius of the side wall inner surface.

9. The electric rice cooker according to claim 7 or 8 **characterized in that** the second revolution generatrix includes a first straight segment (33) for forming the bottom inner surface of the inner pot (30), said first straight segment (33) being tangent to the side wall segment (32), such that the side wall segment (32) and the first straight segment (33) smoothly join together.

10. The electric rice cooker according to any one of claims 7 to 9, **characterized in that** the side wall curved segment is a side wall arc segment (32), which has a side wall arc radius (r) and a second circle center (x); the perpendicular distance between the second circle center (x) and the second revolution axis (o) is greater than zero, and the second circle center (x) and the side wall arc segment (31) are located at the same side of the second revolution axis (o).

11. The electric rice cooker according to claim 6, **characterized in that** the second revolution generatrix includes a side wall arc segment for forming the side wall inner surface of the inner pot (30), and the side wall arc segment has a third circle center, and the perpendicular distance between the third circle center and the second revolution axis (o) is equal to zero.

12. The electric rice cooker according to claim 11, **characterized in that** the first circle center and the third circle center coincide.

13. The electric rice cooker according to any one of claims 1 to 12 **characterized in that** the maximal revolution radius of the side wall inner surface of the inner pot (30) is greater than the radius of the opening part of the inner pot (30).

14. The electric rice cooker according to any one of claims 1 to 13 **characterized in that** the ratio of the radius of the opening of the inner pot (30) to the maximal revolution radius of the side wall inner surface of the inner pot is greater than or equal to 0.85 and less than or equal to 0.95.

15. The electric rice cooker according to claim 14 **characterized in that** said ratio of the opening of the inner pot (30) to the maximal revolution radius of the side wall inner surface of the inner pot is greater than or equal to 0.9 and less than or equal to 0.94.

16. The electric rice cooker according to any one of claims 1 to 15 **characterized in that** the bottom inner surface of the inner pot (30) is straight.

## Patentansprüche

1. Elektrischer Reiskocher, umfassend einen Innentopf (30) und eine Innenabdeckung (10) zum Abdecken einer Öffnung des Innentopfes (30), wobei der Reiskocher ferner eine Heizplatte (50) umfasst, wobei der Innentopf (30) geeignet ist, Reis und Wasser zu enthalten, und eine Seitenwand und eine Bodenfläche aufweist, die mit der Heizplatte (50) in Kontakt ist; wobei wenigstens ein Teil der Innenfläche der Innenabdeckung (10) in eine Richtung weg vom Innentopf (30) ragt; wobei wenigstens ein Teil der Innenfläche des Innentopfes (30) eine nach außen vorstehende Form aufweist, wobei der Reiskocher **dadurch gekennzeichnet ist, dass** die Seitenwand nach außen gewölbt ist.

2. Elektrischer Reiskocher nach Anspruch 1, **dadurch gekennzeichnet, dass** der vorstehende Abschnitt des wenigstens einen Teils der Innenfläche der Innenabdeckung (10) in der oberen Mitte der Innenabdeckung (10) ausgebildet ist.

3. Elektrischer Reiskocher nach Anspruch 1, **dadurch gekennzeichnet, dass** die gesamte Innenfläche der Innenabdeckung (10) in die Richtung weg vom Innentopf (30) ragt.

4. Elektrischer Reiskocher nach Anspruch 3, **dadurch gekennzeichnet, dass** die Innenfläche der Innenabdeckung (10) eine erste Umwälzfläche ist, die einen ersten Umwälzerzeuger und eine erste Umwälzachse aufweist.

5. Elektrischer Reiskocher nach Anspruch 4, **dadurch gekennzeichnet, dass** der erste Umwälzerzeuger ein Bogen ist, der ein an der ersten Umwälzachse angeordnetes erstes Kreiszentrum aufweist.

6. Elektrischer Reiskocher nach Anspruch 5, **dadurch gekennzeichnet, dass** die Innenfläche des Innentopfes (30) eine zweite Umwälzfläche ist, die einen zweiten Umwälzerzeuger und eine zweite Umwälzachse aufweist, und dass die erste Umwälzachse und die zweite Umwälzachse zusammenfallen.

7. Elektrischer Reiskocher nach Anspruch 6, **dadurch gekennzeichnet, dass** der zweite Umwälzerzeuger ein bogenförmiges Segment (32) der Seitenwand zum Bilden der Seitenwand-Innenfläche des Innentopfes (30) aufweist.

8. Elektrischer Reiskocher nach Anspruch 7, **dadurch gekennzeichnet, dass** der maximale Krümmungsradius des bogenförmigen Segments der Seitenwand kleiner als der Kreisradius der maximalen Breite der Seitenwand-Innenfläche ist.

9. Elektrischer Reiskocher nach Anspruch 7 oder 8, **dadurch gekennzeichnet, dass** der zweite Umwälzerzeuger ein erstes gerades Segment (33) zum Bilden der Bodeninnenfläche des Innentopfes (30) aufweist, wobei das erste gerade Segment (33) das Seitenwandsegment (32) so berührt, dass das Seitenwandsegment (32) und das erste gerade Segment (33) sanft aneinander angrenzen.

10. Elektrischer Reiskocher nach einem der Ansprüche 7 bis 9, **dadurch gekennzeichnet, dass** das bogenförmige Segment der Seitenwand ein Seitenwand-Bogensegment (32) ist, das einen Seitenwand-Bogenradius (r) und ein zweites Kreiszentrum (x) aufweist, dass der senkrechte Abstand zwischen dem zweiten Kreiszentrum (x) und der zweiten Umwälzachse (o) größer als Null ist, und dass das zweite Kreiszentrum (x) und das Seitenwand-Bogensegment (31) auf der gleichen Seite der zweiten Umwälzachse (o) angeordnet sind.

11. Elektrischer Reiskocher nach Anspruch 6, **dadurch gekennzeichnet, dass** der zweite Umwälzerzeuger ein Seitenwand-Bogensegment zum Bilden der Seitenwand-Innenfläche des Innentopfes (30) aufweist, und das Seitenwand-Bogensegment ein drittes Kreiszentrum hat und der senkrechte Abstand zwischen dem dritten Kreiszentrum und der zweiten Umwälzachse (o) gleich Null ist.

12. Elektrischer Reiskocher nach Anspruch 11, **dadurch gekennzeichnet, dass** das erste Kreiszentrum und das dritte Kreiszentrum zusammenfallen.

13. Elektrischer Reiskocher nach einem der Ansprüche 1 bis 12, **dadurch gekennzeichnet, dass** der maximale Umwälzradius der Seitenwand-Innenfläche des Innentopfes (30) größer als der Radius des Öffnungsteils des Innentopfes (30) ist.

14. Elektrischer Reiskocher nach einem der Ansprüche 1 bis 13, **dadurch gekennzeichnet, dass** das Verhältnis des Radius der Öffnung des Innentopfes (30) zum maximalen Umwälzradius der Seitenwand-Innenfläche des Innentopfes größer als oder gleich 0,85 und kleiner als oder gleich 0,95 ist.

15. Elektrischer Reiskocher nach Anspruch 14, **dadurch gekennzeichnet, dass** das Verhältnis der Öffnung des Innentopfes (30) zum maximalen Umwälzradius der Seitenwand-Innenfläche des Innentopfes größer als oder gleich 0,9 und kleiner als oder gleich 0,94 ist.

16. Elektrischer Reiskocher nach einem der Ansprüche 1 bis 15, **dadurch gekennzeichnet, dass** die Bodeninnenfläche des Innentopfes (30) gerade ist.

## Revendications

1. Cuiseur à riz électrique comprenant une cuve interne (30) et un couvercle interne (10) pour couvrir une ouverture de la cuve interne (30), ledit cuiseur à riz comprenant en outre une plaque chauffante (50), ladite cuve interne (30) étant apte à contenir du riz et de l'eau, et présentant une paroi latérale et une face inférieure qui est en contact avec ladite plaque chauffante (50) ; au moins une partie de la surface interne du couvercle interne (10) faisant saillie dans la direction s'éloignant de la cuve interne (30) ; au moins une partie de la surface interne de la cuve interne (30) présentant une forme faisant saillie vers l'extérieur, ledit cuiseur à riz étant **caractérisé en ce que** ladite paroi latérale est bombée vers l'extérieur.

2. Cuiseur à riz électrique selon la revendication 1, **caractérisé en ce que** la partie en saillie de l'au moins une partie de la surface interne du couvercle interne (10) est formée au niveau du centre supérieur du couvercle interne (10).

3. Cuiseur à riz électrique selon la revendication 1, **caractérisé en ce que** la surface interne entière du couvercle interne (10) fait saillie dans la direction s'éloignant de la cuve interne (30).

4. Cuiseur à riz électrique selon la revendication 3, **caractérisé en ce que** la surface interne du couvercle interne (10) est une première surface de révolution, qui présente une première génératrice de révolution et un premier axe de révolution.

5. Cuiseur à riz électrique selon la revendication 4, **caractérisé en ce que** la première génératrice de révolution est un arc, qui a un premier centre de cercle situé sur le premier axe de révolution.

6. Cuiseur à riz électrique selon la revendication 5, **caractérisé en ce que** la surface interne de la cuve interne (30) est une seconde surface de révolution, qui présente une seconde génératrice de révolution et un second axe de révolution, et le premier axe de révolution et le second axe de révolution sont confondus.

7. Cuiseur à riz électrique selon la revendication 6, **caractérisé en ce que** la seconde génératrice de révolution comprend un segment courbé de paroi latérale (32) pour former la surface interne de paroi latérale de la cuve interne (30).

8. Cuiseur à riz électrique selon la revendication 7, **caractérisé en ce que** le rayon de courbure maximal du segment courbé de la paroi latérale est inférieur au rayon de cercle de latitude maximal de la surface interne de paroi latérale.

9. Cuiseur à riz électrique selon la revendication 7 ou 8, **caractérisé en ce que** la seconde génératrice de révolution comprend un premier segment rectiligne (33) pour former la surface interne inférieure de la cuve interne (30), ledit premier segment rectiligne (33) étant tangent au segment de paroi latérale (32), de sorte que le segment de paroi latérale (32) et le premier segment rectiligne (33) se rejoignent de manière douce.

10. Cuiseur à riz électrique selon l'une quelconque des revendications 7 à 9, **caractérisé en ce que** le segment courbé de la paroi latérale est un segment d'arc de paroi latérale (32), qui présente un rayon d'arc de paroi latérale (r) et un deuxième centre de cercle (x) ; la distance perpendiculaire entre le deuxième centre de cercle (x) et le second axe de révolution (o) étant supérieure à zéro, et le deuxième centre de cercle (x) et le segment d'arc de paroi latérale (31) sont positionnés du même côté du second axe de révolution (o).

11. Cuiseur à riz électrique selon la revendication 6, **caractérisé en ce que** la seconde génératrice de révolution comprend un segment d'arc de paroi latérale pour former la surface interne de paroi latérale de la cuve interne (30), et le segment d'arc de paroi latérale comporte un troisième centre de cercle, et la distance perpendiculaire entre le troisième centre de cercle et le second axe de révolution (o) est égale à zéro.

12. Cuiseur à riz électrique selon la revendication 11, **caractérisé en ce que** le premier centre de cercle et le troisième centre de cercle sont confondus.

13. Cuiseur à riz électrique selon l'une quelconque des revendications 1 à 12, **caractérisé en ce que** le rayon de révolution maximal de la surface interne de paroi latérale de la cuve interne (30) est supérieur au rayon de la partie d'ouverture de la cuve interne (30).

14. Cuiseur à riz électrique selon l'une quelconque des revendications 1 à 13, **caractérisé en ce que** le rapport entre le rayon de l'ouverture de la cuve interne (30) et le rayon de révolution maximal de la surface interne de paroi latérale de la cuve interne est supérieur ou égal à 0,85 et inférieur ou égal à 0,95.

15. Cuiseur à riz électrique selon la revendication 14, **caractérisé en ce que** ledit rapport entre l'ouverture de la cuve interne (30) et le rayon de révolution maximal de la surface interne de paroi latérale de la cuve interne est supérieur ou égal à 0,9 et inférieur ou égal à 0,94.

16. Cuiseur à riz électrique selon l'une quelconque des revendications 1 à 15, **caractérisé en ce que** la surface interne inférieure de la cuve interne (30) est rectiligne.
